Europäisches Patentamt

(19) European Patent Office

Office européen des brevets

(11) Publication number: **0 304 204 B1**

(12) **EUROPEAN PATENT SPECIFICATION**

(45) Date of publication of patent specification:
04.12.91 Bulletin 91/49

(51) Int. Cl.⁵ : **B60S 1/40**

(21) Application number: 88307282.9

(22) Date of filing: 05.08.88

(54) Pivot joint.

(30) Priority: 20.08.87 GB 8719690

(43) Date of publication of application:
22.02.89 Bulletin 89/08

(45) Publication of the grant of the patent:
04.12.91 Bulletin 91/49

(84) Designated Contracting States:
BE DE ES FR IT

(56) References cited:
EP-A- 0 231 129
EP-A- 0 240 357
EP-A- 0 255 352

(56) References cited:
DE-A- 1 505 441
DE-A- 2 851 972
DE-B- 2 758 914
GB-A- 2 041 730

(73) Proprietor: TRICO-FOLBERTH LIMITED
Great West Road
Brentford Middlesex TW8 9HP (GB)

(72) Inventor: Frimley, Charles Henry
25, Redford Road
Windsor Berkshire (GB)

(74) Representative: Pedder, James Cuthbert
J.C. Pedder & Co. 38 Norbury Cross
Norbury London SW16 4JQ (GB)

## Description

This invention relates to a pivot joint for connection of a windscreen wiper blade to a windscreen wiper arm.

In the manufacture of windscreen wipers, a number of pivot joints are used, particularly between the arm and blade and between the various yokes and/or levers of the blade itself. Problems exist in the manufacture of windscreen wipers due to the necessity, very often, of pivoting metal parts together. These tend to be noisy and have a tendency to suffer from wear and corrosion. Various proposals have been made for overcoming these problems, for example, by the provision of plastics members between the metal of the joints, but these have not proved entirely satisfactory from a manufacturing standpoint although they have worked satisfactorily in practice. In our prior patent Application No. 87300804.9 (published as EP-A-0231129), there was proposed a pivot joint for pivotally connecting two members which comprised a joint body including first attachment means for attaching the body to one of the members to be pivoted, second attachment means for attaching the body with sufficient play to the other of the two members to be pivoted to allow pivotal movement between the body and the said other member, the second attachment means being provided with sprung retention means, movable between a first, stable position in which it retains the joint body on the said other member and a second unstable position in which the joint body can be assembled on the said other member.

In particular embodiments of this prior application, there was shown the use of this joint body in connecting a windscreen wiper blade to a windscreen wiper arm. While these joints have worked satisfactorily in many cases, they have, for certain applications, the disadvantage that the effective pivot point between arm and blade is situated longitudinally offset from the centre of the blade.

It will be appreciated that a number of proposals have been made for providing joints between the yokes or levers of a windscreen wiper blade harness using trunnions or knife edges in one form or another but none of these are applicable to the attachment of a windscreen wiper arm to a windscreen wiper blade, the construction of which latter joints are totally different. Such prior proposals include GB-A-2041730, DE-A-2758914 and DE-A-1505441.

The present invention seeks to provide a pivot joint for connecting a windscreen wiper arm to a windscreen wiper blade, such as that disclosed in EP-A-0231129, in which the effective pivot point can be located centrally of the joint or can, in any event be located in a desired position relative to the windscreen wiper blade.

According to the invention, a pivot joint for connecting a windscreen wiper arm to a windscreen wiper blade comprises a windscreen wiper arm, a primary yoke or lever of a windscreen wiper blade, which yoke or lever is of substantially channel section, at least in the region of the joint and has an aperture in the web of the section and a joint body adapted to lie in the aperture and including first attachment means for attaching the body to the arm, and second attachment means for attaching the joint body with sufficient play to the primary yoke or lever to allow pivotal movement between the joint body and the primary yoke or lever, the second attachment means being provided with sprung retention means, movable between a first, stable position in which it retains the joint body on the primary yoke or lever and a second unstable position in which the joint body can be assembled on or disassembled from the primary yoke or lever (Pivot joint of the type disclosed in EP-A-0231129), characterised in that a pair of aligned pivot members is provided lying on exterior sides of the joint body engageable with the edge of the aperture in the primary yoke or lever and about which pivoting can take place.

Further developments in line with claim 1 are referred to in the dependent claims.

The invention will now be described in greater detail, by way of example, with reference to the drawings, in which :

Figure 1 i a perspective view from above of a joint body of a pivot joint in accordance with one embodiment of the invention ;

Figure 2 is a perspective view from below of the joint body of figure 1 ;

Figure 3 is a longitudinal sectional view through part of an arm and part of the main yoke of a windscreen wiper pivoted together by means of the joint body shown in figures 1 and 2 ;

Figure 4 is a longitudinal side view of the joint shown in figure 3 ;

Figure 5 is a view similar to figure 3 showing a modified joint body, and

Figure 6 is a view similar to figure 3 but showing a joint body suitable for use with a hook end arm termination.

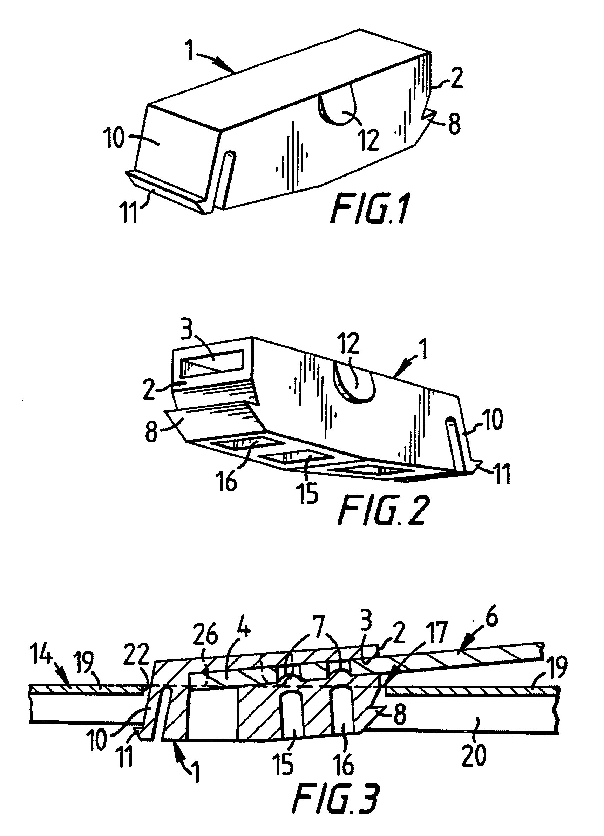

Referring firstly to figures 1 to 4, the joint body 1 shown comprises a plastics moulding hollowed out from one end 2 to provide a passage 3 for receiving the end 4 of the arm 6 of the wiper. It will be noted that this arm has an unusual termination, being straight and having two apertures 7 for a purpose to be described. Below the mouth of the passage 3 is a projection 8 extending to the right.

The left hand end of the joint body 1 is provided with a resilient tongue 10 which extends downwardly from the top of the joint body 1 and is provided, towards its lower end, with a detent 11. On each side of the joint body are situated two laterally extending trunnion like members 12.

Considering now the assembly of this pivot joint, it is to be remembered that while it is necessary to be able to detach the blade 14 from the arm 6, it is unnecessary to be able to remove the joint body 1 from the arm 6.

First, the connector is assembled onto the arm 6.

Referring particularly to figure 3, prior to assembly, two indents 15 and 16 are shown which have not yet been formed. The end 4 of the arm 6 is pushed down the passage 3 until it engages the end of the passage 3. This locates the arm 6 relative to the joint body 1. At this point, the two indents 15 and 16 are punched into the joint body 1, providing a half shear of the material of the body at those positions. In so doing, the material of the body is pushed into the apertures 7 in the end 4 of the arm 6, thus securing the arm from removal from the passage 3.

To assemble the windscreen wiper blade 14 onto the arm 6, the left hand end of the joint body 1 is inserted into an aperture 17 formed in the web 19 of the channel sectioned primary yoke 20 of the blade 14. It is to be understood that this aperture 17 may be the aperture often provided in the primary yoke for arm attachment, the only significant difference in this case is that the pivot pin, normally used in the attachment, is missing.

The end edge 22 of the aperture 17 is pushed against the tongue 10 to flex it to the right, thereby reducing the length taken up by the body 1 and thus enabling the right hand end of the body 1 to be inserted in the aperture 17 in its turn until the trunnion like members 12 engage the edge 26 of the aperture 17. The blade is then released, allowing the tongue 10 to spring out again and provide locking of the joint body 1 in the blade 14.

It will be seen, that the arm can pivot about the trunnion like members 12, the pivotal movement being limited in a first direction by engagement of the primary yoke 20 by the arm 6 and in a second direction by engagement of the upper surface of the projection 8 with the underside of the web 19 of the yoke 20.

To remove the blade 14 from the arm 6, all that is required is to move the blade 14 downwardly away from the arm 6 to raise the joint body 1 with respect to the blade 14 and then to push the blade 14 longitudinally towards the arm 6. This engages the resilient tongue 10 with the edge 22 of the aperture 17 and moves the resilient tongue 10 to the right and allows the right hand end of the joint body 1 to be removed from the aperture 17 in the yoke 20. Once the projection 8 has cleared the aperture 17, the left hand end of the body 1 can readily be removed therefrom.

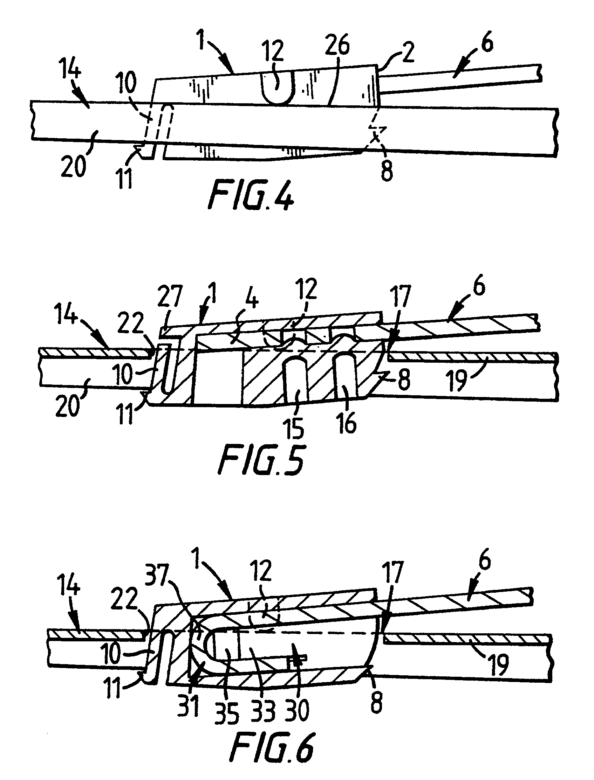

Figure 5 shows a modified embodiment as compared to that described in figures 1 to 4. In this embodiment, the tongue 10 is attached to the bottom of the joint body 1 and extends upwardly to lie under a projection 27 of the joint body 1. The detent 11 remains, as before, at the lower part of the tongue 10.

When it is desired to use a blade made up to take the joint body above described in the replacement market, it is necessary to take into account other arm terminations which may be used. One of the most popular of these is the so called "hook" termination. Figure 6 shows a modified embodiment of the joint body 1 suitable for receiving a hook termination.

In this embodiment, the passage 3 is enlarged into a space 30 large enough for the hook 31 of an arm 6 to be pushed thereinto. Formed in one side of the body 1 is a resilient tongue 33 which carries at its end an inwardly directed projection 35. In the assembled position, this projection sits behind the bend 37 of the hook 31, thus securing the hook against removal. The hook 31 may be removed when desired by flexing the tongue 33 outwardly. Accidental flexing of the tongue 33 outwards when the wiper is in use is prevented by the side walls of the aperture 17 in the primary yoke 20 of the windscreen wiper blade 14.

It will be appreciated that various modifications and/or additions may be made to the above described embodiments without departing from the scope of the invention. For example, the end of the joint body 1 carrying the tongue 10 may be provided with an extension forming a continuation of its upper surface so that the limitation of movement otherwise achieved by engagement of the arm 6 with the main yoke 20 is replaced by engagement of this extension with the exterior of the web 19 adjacent the aperture 17. Instead of the members 12 having a round profile at their lower edge they could have a "V" shaped profile.

If desired, the configuration of the tongue 10 used in figure 5 could replace that used in figure 6.

## Claims

1. A pivot joint for connecting a windscreen wiper arm to a windscreen wiper blade comprising a windscreen wiper arm (6), a primary yoke or lever (14) of a windscreen wiper blade, which yoke or lever (14) is of substantially channel section, at least in the region of the joint and has an aperture (17) in the web (19) of the section and a joint body (1) adapted to lie in the aperture (17) and including first attachment means (3, 7) for attaching the body (1) to the arm (6), and second attachment means (8, 10, 11) for attaching the joint body (1) with sufficient play to the primary yoke or lever (14) to allow pivotal movement between the joint body (1) and the primary yoke or lever (14), the second attachment means (8, 10) being provided with sprung retention means (11), movable between a first, stable position in which it retains the joint body (1) on the primary yoke or lever (14) and a second unstable position in which the joint body can be assembled on or disassembled from the primary yoke or lever (14) characterised by a pair of aligned pivot members (12) lying on exterior sides of the joint body (1) engageable with the edge (26) of the aperture (17) in the primary yoke or lever (14) and about which pivoting can take place.

2. A pivot joint as claimed in claim 1, characterised in that the pair of aligned pivot members (12) are a pair of trunnion like elements extending laterally from the sides of the joint body (1), these trunnion like elements engaging the adjacent edges (26) of the aperture (17) in the blade yoke or lever (14) to provide a pivoting action similar to a knife edge pivot.

3. A pivot joint as claimed in claim 1 or 2, characterised in that the sprung retention means comprises a detent (11) carried by a resilient tongue (10).

4. A pivot joint as claimed in claim 3, characterised in that the tongue (10) extends from a part of the joint body (1) intended to pass through the aperture (17) and is movable between a first stable position in which it renders a dimension of the said part too large to pass through the aperture (17) in the said other member (14) so as to retain the joint body (1) on the said other member (14) and a second unstable position in which it allows the said portion to pass through the aperture (17) so that the joint body (1) can be assembled on and disassembled from the said other member (14).

5. A pivot joint as claimed in claim 3, characterised in that the tongue (10) extends from a part of the joint body (1) intended to stay outside the aperture (17) and the detent (11) is movable between a first stable position in which it renders a dimension of the part of the joint body (1) intended to pass through the aperture (17) in the said other member (14) too large to pass through the aperture (14) so as to retain the joint body (1) on the said other member (14) and a second unstable position in which it allows the latter part of the joint body (1) to pass through the aperture (17) so that the joint body (1) can be assembled on and disassembled from the said other member (14).


**Patentansprüche**

1. Schwenkverbindung zum Verbinden eines Scheibenwischerarmes mit einem Scheibenwischerblatt, die einen Scheibenwischerarm (6), einen primären Bügel oder Hebel (14) des Scheibenwischerblattes, wobei dieser Bügel oder Hebel (14) zumindest im Bereich der Verbindung einen im wesentlichen kanalförmigen Querschnitt aufweist und in der Fläche (19) des Teilabschnittes eine Öffnung (17) aufweist, und einen Verbindungskörper (1) umfaßt, der in der Öffnung (17) liegt und eine erste Befestigungseinrichtung (3, 7) zum Anbringen des Körpers (1) an den Arm (6) und eine zweite Befestigungseinrichtung (8, 10, 11) umfaßt, um den Verbindungskörper (1) mit einem ausreichenden Spiel an den primären Bügel oder Hebel (14) anzubringen, um eine Schwenkbewegung zwischen dem Verbindungskörper (1) und dem primären Bügel oder Hebel (14) zu ermöglichen, wobei die zweite Befestigungseinrichtung (8, 10) mit einer federnden Rückhalteeinrichtung (11) versehen ist, die zwischen einer ersten stabilen Position, in der sie den Verbindungskörper (1) auf dem primären Bügel oder Hebel (14) hält, und einer zweiten instabilen Position beweglich ist, in der der Verbindungskörper am primären Bügel oder Hebel (14) befestigt oder von diesem entfernt werden kann, gekennzeichnet durch ein Paar ausgerichteter Schwenkteile (12), die auf den Außenseiten des Verbindungskörpers (1) liegen und in die Kante (26) der Öffnung (17) im primären Bügel oder Hebel (14) eingreifen können und über die die Schwenkbewegung stattfinden kann.

2. Schwenkverbindung nach Anspruch 1, dadurch gekennzeichnet, daß das Paar der ausgerichteten Schwenkteile (12) ein Paar drehzapfenartiger Elemente ist, die sich seitlich von den Seitenflächen des Verbindungskörpers (1) erstrecken, wobei diese drehzapfenartige Elemente in die benachbarten Kanten (26) der Öffnung (17) im Blattbügel oder -hebel (14) eingreifen, um eine Schwenkbewegung zu ermöglichen, die einer Waageschneide-Schwenkverbindung ähnlich ist.

3. Schwenkverbindung nach Anspruch 1 oder 2, dadurch gekennzeichnet, daß die federnde Rückhalteeinrichtung eine einrückbare Arretierung (11) umfaßt, die von einer elastischen Feder (10) getragen wird.

4. Schwenkverbindung nach Anspruch 3, dadurch gekennzeichnet, daß sich die Feder (10) von einem Teil des Verbindungskörpers (1) erstreckt, der durch die Öffnung (17) hindurchgehen soll, und zwischen einer ersten stabilen Position, in der sie die Abmessung dieses Teils zu stark vergrößert, um durch die Öffnung (17) im anderen Teil (14) hindurchzugehen, so daß der Verbindungskörper (1) auf dem anderen Teil (14) bleibt, und einer zweiten instabilen Position beweglich ist, in der sie ermöglicht, daß dieser Abschnitt durch die Öffnung (17) hindurchgeht, so daß der Verbindungskörper (1) auf dem anderen Teil (14) angebracht oder von diesem entfernt werden kann.

5. Schwenkverbindung nach Anspruch 3, dadurch gekennzeichnet, daß sich die Feder (10) von einem Teil des Verbindungskörpers (1) erstreckt, der außerhalb der Öffnung (17) bleiben soll, und die einrückbare Arretierung (11) zwischen einer ersten stabilen Position, in der sie die Abmessung des Teils des Verbindungskörpers (1), der durch die Öffnung (17) im anderen Teil (14) hindurchgehen soll, zu sehr vergrößert, um durch die Öffnung (14) hindurchzugehen, so daß der Verbindungskörper (1) auf dem anderen Teil (14) bleibt, und einer zweiten instabilen Position beweglich ist, in der sie gestattet, daß der letztere Teil des Verbindungskörpers (1) durch die Öffnung (17) hindurchgeht, so daß der Verbindungskörper (1) auf dem anderen Teil (14) angebracht oder von diesem entfernt werden kann.

## Revendications

1. Joint d'articulation destiné à relier un bras d'essuie-glace avec une lame d'essuie-glace comprenant un bras d'essuie-glace (6), un étrier ou levier principal (14) d'une lame d'essuie-glace, lequel étrier ou levier (14) est de section sensiblement en forme de U, au moins dans la zone de l'articulation et comporte une ouverture (15) dans l'âme (19) de la section et un joint d'articulation (1) apte à se situer dans l'ouverture (15) et comprenant des premiers moyens de fixation (3, 7) pour la fixation sur le corps (1) avec le bras (6) et des seconds moyens de fixation (8, 10, 11) pour la fixation du corps d'articulation (1) avec un jeu suffisant sur l'étrier ou levier principal (14) pour permettre le mouvement pivotant entre le corps d'articulation (1) et l'étrier ou levier principal (14), les seconds moyens de fixation (8, 10) étant munis de moyens de retenue sur ressort (11) mobiles entre une première position stable dans laquelle ils maintiennent le corps d'articulation (1) sur l'étrier ou levier principal (14) et une seconde position instable dans laquelle le corps d'articulation peut être monté ou démonté de l'étrier ou levier principal (14), caractérisé par une paire d'éléments pivotants alignés (12) se situant sur les côtés extérieurs du corps d'articulation (1) pouvant coopérer avec le bord (26) de l'ouverture (17) dans l'étrier ou levier principal (14) et autour duquel peut s'effectuer un pivotement.

2. Joint d'articulation selon la revendication 1, caractérisé en ce que la paire d'éléments pivotants alignés (12) consiste en une paire d'éléments en forme de tourillon s'étendant latéralement à partir des côtés du corps d'articulation (1), ces éléments en forme de tourillon venant en contact avec les bords contigus (26) de l'ouverture (17) dans l'étrier ou levier de lame (14) pour assurer une action pivotante similaire à un pivot sur tranchant de couteau.

3. Joint d'articulation selon la revendication 1 ou 2, caractérisé en ce que les moyens de retenue sur ressort comprennent un cran à déclic (11) supporté par une languette élastique (10).

4. Joint d'articulation selon la revendication 3, caractérisé en ce que la languette (10) s'étend à partir d'une partie du corps d'articulation (1) pour traverser l'ouverture (17) et en ce qu'elle est mobile entre une première position stable dans laquelle elle rend la dimension de la dernière pièce trop importante pour qu'elle puisse traverser l'ouverture (17) dans l'autre élément (14) de façon à retenir le corps d'articulation (1) sur l'autre élément (14) et une seconde position instable dans laquelle elle permet à cette portion de traverser l'ouverture (17) de façon que le corps d'articulation (1) puisse être monté et démonté de l'autre élément (14).

5. Joint d'articulation selon la revendication 3, caractérisé en ce que la languette (10) s'étend à partir d'une partie du corps d'articulation (1) pour demeurer à l'extérieur de l'ouverture (17) et le cran à déclic (11) est mobile entre une première position stable dans laquelle il rend une dimension de la pièce du corps d'articulation (1) devant traverser l'ouverture (17) dans l'autre élément (14) trop importante pour qu'elle puisse traverser l'ouverture (14) de façon à retenir le corps d'articulation (1) sur l'autre élément (14) et une seconde position instable dans laquelle il permet à cette dernière partie du corps d'articulation (1) de traverser l'ouverture (17) de façon que le corps d'articulation (1) puisse être monté et démonté de l'autre élément (14).

FIG.1

FIG.2

FIG.3

FIG.4

FIG.5

FIG.6